# FASCICULE DE BREVET EUROPEEN

(11) **EP 0 623 285 B1**
(45) Date de publication et mention de la délivrance du brevet: **11.03.1998**
(21) Numéro de dépôt: 94440030.8
(22) Date de dépôt: 04.05.1994
(51) Int. Cl.: A21C 11/16, A23G 3/30

(54) **Installation de purge automatique pour une ligne de production d'un boudin de produit pâteux**
Automatische Reinigungsanlage für eine Fertigungsstrasse zur Herstellung eines länglichen Teigkörpers
Automatic purging installation for a dough sausage production line

(30) Priorité: 05.05.1993 FR 9305550
(43) Date de publication de la demande: 09.11.1994
(73) Titulaire: ROBERT BOSCH GMBH, 70049 Stuttgart (DE)
(72) Inventeur: Towae, Gérard, F-67000 Strasbourg (FR)
(74) Mandataire: Metz, Paul

(56) Documents cités:
- EP-A- 0 524 902
- GB-A- 2 011 827
- US-A- 4 480 753

## Description

La présente invention se rapporte à une installation de purge automatique pour ligne de production d'un boudin extrudé de produit alimentaire pâteux.

Cette installation est prévue pour évacuer les fractions de boudin présentant des impuretés et recycler les longueurs de boudin produit en continu en cas d'indisponibilité des machines de conformation ultérieure ou de conditionnement.

Dans la majorité des unités ou lignes de fabrication de produits alimentaires, on travaille actuellement en flux continus et à vitesse élevée.

Ceci impose simultanément deux contraintes importantes.

La première concerne la détection et l'évacuation des produits défectueux ou des zones défectueuses dans le produit lorsqu'il se présente en une masse continue. En effet, l'accroissement de vitesse s'accompagne de la contamination plus fréquente par des masses métalliques provenant des organes en mouvement à haut régime.

La deuxième se rapporte à l'indisponibilité momentanée possible d'une des machines constituant l'un des maillons de la ligne de production en raison d'ennuis liés soit à la fiabilité ou au produit soit à la maintenance.

Il existe actuellement des détecteurs de métal placés en série sur le trajet du produit qui permettent de commander une ou plusieurs unités d'éjection lors de la détection d'un corps étranger métallique dans le produit. Ces unités comprennent un détecteur qui commande l'ouverture d'une trappe pour d'évacuation des produits ou des tronçons de produit contaminés par des pièces métalliques. Celles-ci sont constituées par des éléments et déchets métalliques divers provenant des organes des machines en amont qui auraient pu être introduits ou arrachés accidentellement dans la chaîne d'élaboration du produit en raison des vitesses de production élevés.

Le rôle de ces unités se limite à la détection puis à l'évacuation des produits contaminés.

Elles restent totalement traversantes pour le produit sain c'est à dire exempt de corps étrangers métalliques. Elles ne constituent nullement un tampon ou une dérivation pour le produit continu propre à la conformation, au traitement ou au conditionnement ultérieur.

On connaît ainsi par le brevet européen n° 0 524 902 TOGUM une unité de détection-éjection pour pâte à mâcher conformée en feuilles. Cette unité est placée en aval du tunnel de refroidissement qui suit l'extrudeur et assure l'interface avec les postes de traitement ultérieur et de conditionnement.

Cette unité constitue un poste complet de calibrage à plusieurs stations présentant chacune une sortie propre pour les excédents de matière. La station finale est un détecteur de métal comportant sa propre sortie d'évacuation en produits chargés en métal.

Cette installation assure à elle seule la conformation, la découpe et le calibrage des produits qui, présents à la sortie doivent être conformes à des critères dimensionnels très précis. Pour des raisons de sécurité, on détecte après le calibrage et les contrôles dimensionnels la présence de métal dans les plaques produites pour éjecter les plaques chargées en métal qui endommageraient les machines qui suivent dans la ligne production.

Cette invention a pour but principal de calibrer et de découper les feuilles pour les transformer en plaques de caractéristiques dimensionnelles bien précises avec évacuation des plaques chargées en métal.

Cette installation fonctionne en continu sur la ligne de production et en cas de panne ou d'indisponibilité d'une des machines aval constituant la suite de la ligne, l'arrêt de la production au niveau de l'extrudeur est impératif ou la quantité de produit sortant en continu de l'unité de génération pendant la durée d'indisponibilité doit être considérée comme perdue et évacuée au rebut.

La présente invention vise deux buts simultanément.

Il s'agit d'abord de détecter en continu les masses métalliques présentes dans le produit puis de couper et d'évacuer le tronçon contaminé sans perte notable de produit.

Il s'agit ensuite de permettre l'intervention de réparation ou d'entretien sur une machine située en aval sans devoir arrêter l'unité de tête générant le produit, tout en recyclant le produit fabriqué à l'entrée de l'unité de tête.

A cet effet, l'invention se rapporte à une installation de purge automatique pour ligne de production et de conditionnement d'un boudin extrudé d'un produit pâteux, caractérisée en ce qu'elle se compose d'un extrudeur, d'un tunnel de refroidissement en ligne avec l'extrudeur, d'un appareil de purge automatique assurant l'interface avec les postes de conformation ultérieure et de conditionnement, l'appareil de purge possédant un détecteur de métal, un ensemble de coupe et trois sorties dont une sortie en ligne, une sortie latérale d'évacuation des tronçons de boudin contaminés et une sortie latérale de recyclage communiquant avec l'entrée de l'extrudeur par une boucle de recyclage à bandes transporteuses.

On comprendra mieux les buts et avantages de l'invention à l'aide de la description ci-après, faite en référence aux figures suivantes :
- la figure 1 est une vue d'ensemble en plan de l'installation dans son environnement comprenant en aval un extrudeur et son tunnel de refroidissement et en amont une enveloppeuse ou autre machine à conditionner.

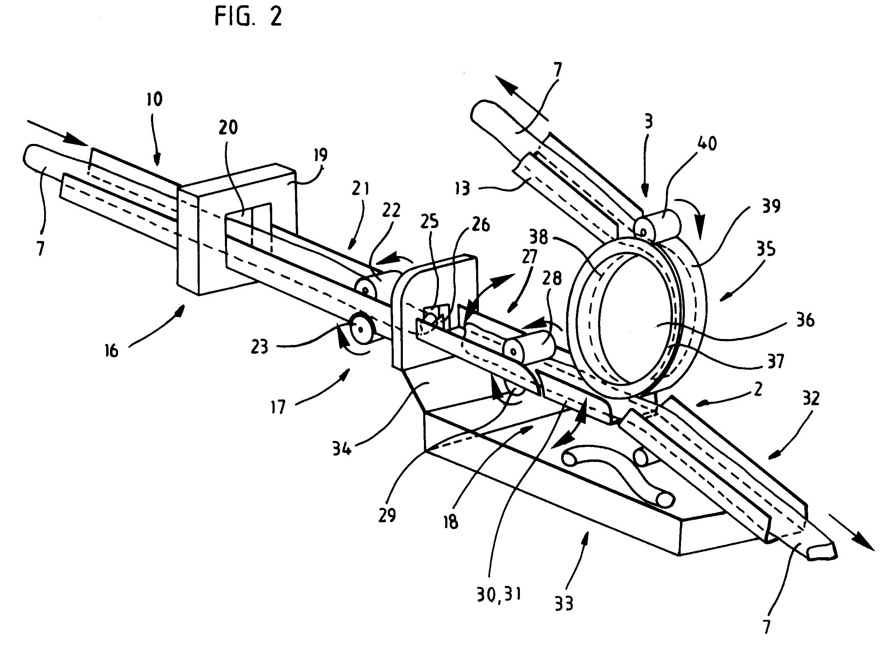

- la figure 2 est une vue schématique en perpective de l'ensemble de purge automatique.
- la figure 3 est une vue de profil de l'ensemble de purge automatique ;
- la figure 4 est la vue en plan de l'ensemble de purge automatique représenté sur la figure 3 ;
- les figures 5 et 6 sont des vues simplifiées de profil de l'ensemble de purge automatique dans le cas d'une évacuation respectivement haute et basse.

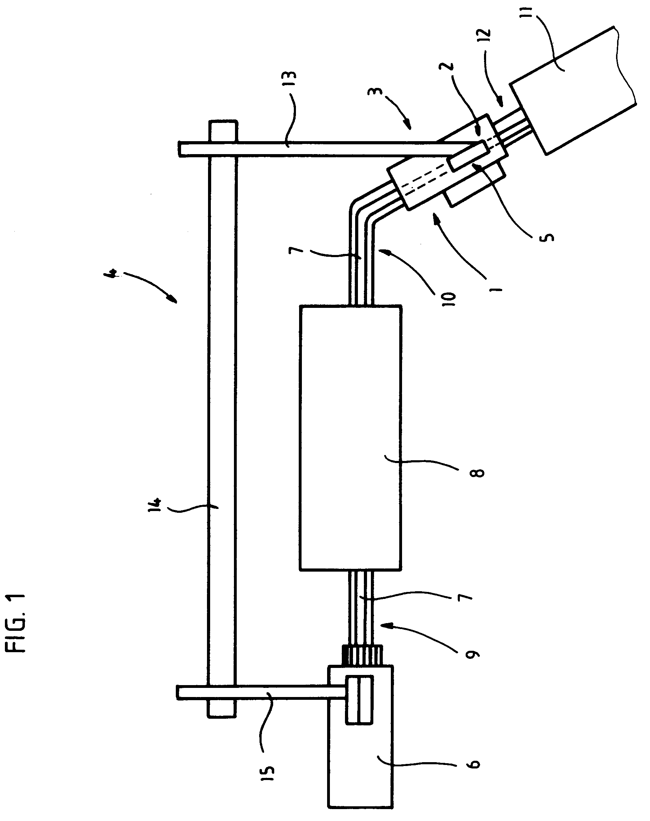

En se référant à la figure 1, l'installation de purge automatique selon l'invention comprend une unité de purge automatique 1 à trois sorties dont une sortie directe 2 en ligne, une sortie latérale de recyclage 3 communiquant avec une boucle de retour 4 du boudin à l'entrée du produit brut dans la machine de production. Cette unité comprend également une sortie latérale d'évacuation 5.

L'installation complète se rapporte à une ligne de production et de conditionnement qui se compose d'une unité de tête, par exemple un extrudeur 6 produisant un boudin 7 de produit pâteux. Ce boudin alimente un tunnel de refroidissement 8 par l'intermédiaire d'une bande transporteuse de transfert 9. Le boudin sort du tunnel de refroidissement pour être acheminé par une bande transporteuse d'alimentation en ligne 10 jusqu'à l'entrée de l'unité de purge automatique 1 de laquelle il ressort par l'une des trois sorties. La sortie directe 2 communique avec la machine de conformation et de conditonnement immédiatement suivante, par exemple une coupeuse-emballeuse 11 par une bande transporteuse de transfert 12. La sortie latérale de recyclage 3 est reliée à l'entrée de l'extrudeur 6 par l'intermédiaire d'une succession de bandes transporteuses de recyclage dont une bande de transfert de sortie 13, une bande principale 14 et une bande d'entrée 15.

L'unité de purge automatique 1 comprend une entrée en ligne faisant suite à la bande transporteuse d'alimentation en ligne 10, un détecteur 16 de présence de débris métalliques, un ensemble de coupe 17, un guide directionnel 18 et trois sorties indiquées ci-dessus.

Plus particulièrement, l'entrée de l'unité de purge automatique est constituée par un bloc de détection en tunnel 19 présentant une ouverture d'accès 20 et équipé d'un circuit de détection de pièces métalliques présentes dans une section du boudin en vue de commander en fonctionnement l'ensemble de coupe 17 et le guide directionnel 18 permettant de sectionner, d'isoler puis d'éliminer le tronçon contaminé.

A la sortie du bloc de détection, le boudin est guidé par un canal de transit 21 jusqu'à l'ensemble de coupe 17. Il progresse le long de ce canal sous l'effet moteur d'un couple de galets aval 22,23. Le canal de transit se rétrécit par un goulet 24 destiné à centrer le boudin sur une fenêtre de passage 25 constituant l'ouverture de coupe à travers laquelle opère un couteau basculant 26 destiné à trancher le boudin aux endroits commandés par l'automate interne de l'unité de purge automatique dès la détection d'une masse quelconque de métal dans le produit.

Pour des raisons de rapidité, le couteau basculant 26 présente une lame pivotante à deux bords tranchants opposés. Ainsi, monté basculant dans la fenêtre de passage 25 traversée par le produit, il sectionne presque instantanément le boudin une première fois par un premier mouvement de basculement puis sectionne une deuxième fois après la fin de détection par un deuxième mouvement de basculement dans l'autre sens. Cette deuxième coupe a lieu après une temporisation adaptée permettant à la fraction du produit contenant la masse métallique d'avoir franchi la zone de coupe. Bien entendu, la commande est réglée de façon à obtenir le tronçon impropre à évacuer le plus court possible.

A la sortie de l'ensemble de coupe, le boudin est dirigé vers le guide directionnel 18 par un conduit d'amenée 27 conformé en gouttière équipé transversalement d'un couple intermédiaire de galets moteurs 28,29.

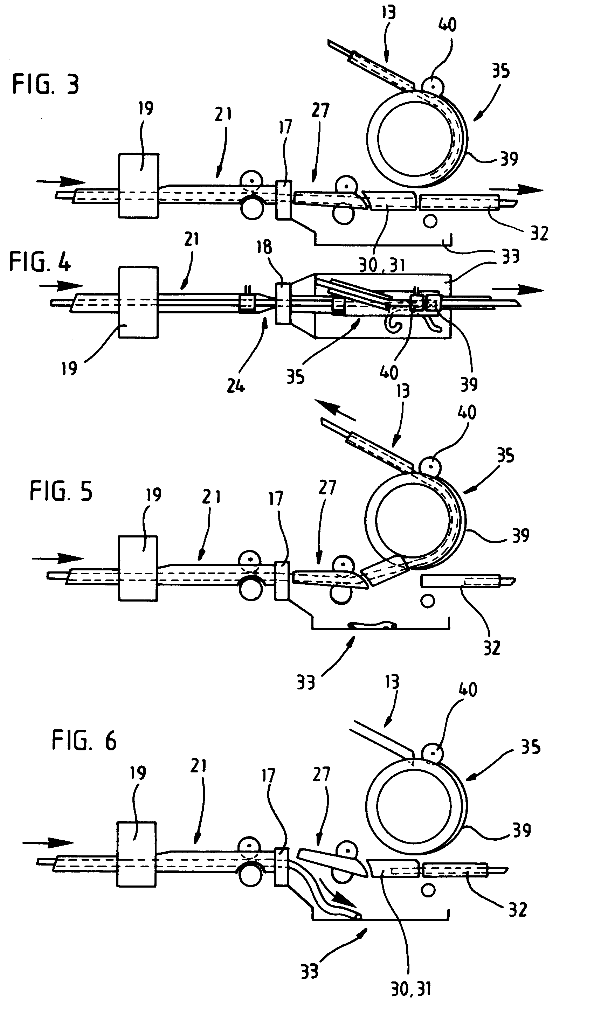

Ce conduit d'amenée 27 est fixe ou basculant. Comme représenté sur la figure 6, selon une variante préférée de l'invention, le conduit d'amenée 27 bascule autour d'un axe transversal de manière à dégager la sortie de l'ouverture de coupe de la fenêtre 25 afin de permettre au tronçon découpé de boudin de sortir et de glisser facilement vers le bas.

Le guide directionnel 18 est réalisé, par exemple, sous la forme d'un basculeur 30 se composant d'une pièce pivotante 31 conformée en gouttière. Cette pièce pivotante bascule d'une position de repos quasi permanente en fonctionnement dans laquelle elle se trouve en prolongation du conduit d'amenée 27 dans une position inclinée vers le haut à la manière d'un déflecteur à rampe et le cas échéant dans une position inférieure inclinée vers le bas à la manière d'une trappe.

Ce basculeur 30 permet de diriger l'extrémité du boudin et de le conduire vers au moins une des deux sorties concernées et le cas échéant vers l'une des trois sorties : la sortie direct en ligne 2 vers les postes de conformation ultérieure et de conditionnement, la sortie de recyclage 3 vers l'unité de production du boudin, par exemple l'extrudeur 6 et dans le cas d'un conduit d'amenée fixe également vers la sortie latérale d'évacuation 5 pour l'élimination des tronçons contaminés.

La sortie en ligne 2 se matérialise par un conduit de sortie 32 de profil en U qui assure l'acheminement du boudin jusqu'au prochain poste aval, la coupeuse-emballeuse 11, par la bande de transfert 12.

La sortie latérale d'évacuation 5, c'est-à-dire celle déviée vers le bas, dirige le tronçon de boudin impropre dans un bac de récupération 33 duquel il est enlevé manuellement. Comme déjà indiqué, cette sortie est de préférence celle de l'ensemble de coupe.

Le bac de récupération 33 est relié à la sortie de l'ensemble de coupe par une rampe inclinée 34 utilisée dans le cas d'un conduit d'amenée 27 basculant pour l'évacuation du tronçon découpé de boudin.

Selon une autre variante possible, la pièce pivotante 31 bascule de façon excentrée autour d'un axe médian en position inclinée basse de manière à dégager l'extrémité du conduit d'amenée 27 en vue de la descente directe dans le bac de récupération 33 du tronçon découpé du boudin.

La sortie latérale de recyclage 3 c'est-à-dire celle déviée vers le haut comporte un organe de renvoi 35 destiné à incurver le boudin et à le faire repartir dans le sens opposé jusqu'à l'extrudeur 6 par la boucle de retour 4 débutant par la bande de sortie 13.

L'organe de renvoi 35 est formé d'un tambour de déviation 36 animé d'un mouvement de rotation d'entrainement du boudin et équipé de deux flasques d'extrémité tels que 37 et 38 de plus grand diamètre lui conférant la conformation générale d'une jante. L'espace annulaire de la jante est fermé par une rampe incurvée 39 par exemple en tôle cintrée sur une portion angulaire comprise entre un quart et un demi cercle en prolongation de l'extrémité de la pièce pivotante 31 du basculeur 30 en position inclinée vers le haut.

Le boudin est ainsi entraîné par la rotation de la jante et guidé dans le volume annulaire de la jante par les parois latérales et la rampe incurvée 39 jusqu'en position supérieure correspondant à la sortie du volume annulaire. En vue de faciliter le mouvement, cette sortie est équipée d'un galet de guidage 40.

Comme déjà indiqué ci-dessus, l'unité de purge automatique placé en série sur le trajet du produit à la sortie du tunnel de refroidissement permet d'éviter la perte de matière et l'arrêt de production lors d'une indisponibilité momentanée d'une machine de conditionnement.

## Revendications

1. Installation de purge automatique pour ligne de production et de conditionnement d'un boudin extrudé d'un produit pâteux se composant d'un extrudeur (6), d'un tunnel de refroidissement (8) en ligne avec l'extrudeur, d'une unité de purge automatique (1) assurant l'interface avec les postes (11) de conformation ultérieure et de conditionnement, l'unité de purge (1) possédant un détecteur de métal (16), un ensemble de coupe (17) et trois sorties dont une sortie en ligne (2), une sortie latérale d'évacuation (3) des tronçons de boudin contaminés et une sortie latérale de recyclage (5) communiquant avec l'entrée de l'extrudeur (6) par une boucle de retour (4) à bandes transporteuses.

2. Installation de purge automatique selon la revendication 1 caractérisée en ce que dans l'unité de purge automatique :
. le détecteur (16) de métal est disposé à l'entrée,
. l'ensemble de coupe (17),
. est relié au détecteur par un canal de transit (21) équipé de galets moteurs (22,23),
. communique par un conduit d'amenée (27) avec un conduit de sortie (32) directe en ligne à travers un basculeur (30) directionnel entre au moins deux positions dont l'une correspond à une position alignée avec les autres guides pour la sortie directe en ligne (2), et l'autre est une position inclinée vers le haut pour la sortie latérale de recyclage, ladite sortie de recyclage comprenant un organe de renvoi (35) du boudin vers une rampe de sortie (13) constituant le début de la boucle de renvoi (4) vers l'extrudeur (6).

3. Installation de purge automatique selon la revendication 2 caractérisée en ce que le conduit d'amenée (27) est monté basculant pour dégager la sortie de l'ouverture de l'ensemble de coupe (17) afin de permettre au tronçon découpé du boudin de glisser dans le bac de récupération (33).

4. Installation de purge automatique selon la revendication 2 ou 3 caractérisée en ce que l'ensemble de coupe (17) est formé d'un couteau (26) basculant dans une fenêtre de passage (25).

5. Installation de purge automatique selon la revendication 4 caractérisée en ce que les deux bords longitudinaux du couteau (26) sont tranchants.

6. Installation de purge automatique selon la revendication 2 caractérisée en ce que le basculeur (30) est formé d'une pièce pivotante (31) entre une position inclinée basse, une position d'alignement avec les conduits d'amenée (27) et de sortie directe (32) du boudin et finalement une position inclinée vers le haut pour le renvoi du boudin en recyclage par l'organe de renvoi (35).

7. Installation de purge automatique selon la revendication 6 caractérisée en ce que la pièce pivotante (31) bascule de façon excentrée autour d'un axe médian en position inclinée basse de manière à dégager l'extrémité du conduit d'amenée (27) en vue de la descente directe dans le bac de récupération (33) du tronçon découpé du boudin.

8. Installation de purge automatique selon les revendications 2 et 6 caractérisée en ce que l'organe de renvoi (35) est formé d'un tambour de déviation (36) équipé de deux flasques d'extrémité (37,38) de plus grand diamètre lui conférant la conformation générale d'une jante dont l'espace annulaire est fermé par une rampe incurvée (39) sur la partie du périmètre située à l'arrière occupant une portion angulaire entre un quart et un demi cercle depuis la position de l'extrémité de la pièce pivotante (31) à l'état relevé jusqu'à une position supérieure de dégagement.

9. Installation de purge automatique selon la revendication 6 caractérisée en ce que la pièce pivotante (31) s'abaisse en position inclinée basse vers le bac de réception (33).

10. Installation de purge automatique selon la revendication 5 caractérisée en ce que le couteau (26) coupe une extrémité du tronçon impropre dans son mouvement aller et l'autre extrémité dans son mouvement retour de pivotement de façon à utiliser ses deux bords tranchants.

## Claims

1. Automatic eliminating installation for a production and packaging line for an extruded sausage of a doughy material, consisting of an extruder (6), a cooling tunnel (8) in line with the extruder, an automatic eliminating unit (1) ensuring the interface with the subsequent shaping and packaging stations (11), the eliminating unit (1), having a metal detector (16), a cutting assembly (17) and three outputs, one output being in line (2), a lateral removal output (3) for sections of contaminated sausage and a lateral recycling output (5) communicating with the input of the extruder (6) by means of a return loop (4) with conveyor belts.

2. Automatic eliminating installation according to Claim 1 characterised in that in the automatic eliminating unit:
. the metal detector (16) is arranged at the input, and
. the cutting assembly (17);
. is connected to the detector by a transport duct (21) fitted with motorised rollers (22,23);
. communicates via a supply duct (27) with an output duct (32) directed in line across a tilting device (30) which is directed between at least two positions, one of which corresponds to a position which is aligned with other guides for the output which is directly in line (2), and the other of which is a slanting position towards the top for the lateral recycling output, said recycling output comprising a return member (35) of the sausage towards an output ramp (13) forming the start of the return loop (4) towards the extruder (6).

3. Automatic eliminating installation according to Claim 2, characterised in that the supply duct (27) is mounted in a tilting manner to disengage the output of the aperture of the cutting assembly (17) in order to allow the cut section of the sausage to slide into the recovery trough (33).

4. Automatic eliminating installation according to Claim 2 or 3 characterised in that the cutting assembly (17) is formed of a knife (26) tilting into a passage window (25).

5. Automatic eliminating installation according to Claim 4 characterised in that the two longitudinal edges of the knife (26) are sharp.

6. Automatic eliminating installation according to Claim 2, characterised in that the tilting device (30) is formed of a part (31) which pivots between a slanting low position, a position of alignment with the supply (27) and direct output (32) ducts for the sausage, and, lastly, a position which is slanting towards the top to return the sausage to recycling by the return member (35).

7. Automatic eliminating installation according to Claim 6, characteirsed in that the pivoting part (31) tilts in an eccentric fashion about a median axis in the lower slanting position in such a manner as to disengage the end of the supply duct (27) with a view to the direct descent, into the recovery trough (33), of the cut section of the sausage.

8. Automatic eliminating installation according to Claims 2 and 6, characterised in that the return member (35) is formed of a deflection drum (36) equipped with two end flanges (37,38) of larger diameter, conferring thereon the general shape of a wheel rim, the annular space of which is closed by a curved ramp (39) on the perimeter part, situated at the rear, occupying an angular section between a quarter and a half-circle behind the end position of the pivoting part (31) in the state of being raised to an upper disengaging position.

9. Automatic eliminating installation according to Claim 6, characterised in that the pivoting part (31) is lowered into the lower slanting position towards the reception trough (33).

10. Automatic eliminating installation according to Claim 5, characterised in that the knife (26) cuts a damaged end of the section in its one-way movement and the other end in its return pivoting movement in such a manner that its two sharp edges are used.

## Patentansprüche

1. Automatische Reinigungsanlage für eine Einheit zur Herstellung und zur Aufbereitung eines extrudierten Strangs aus einem teigartigen Produkt, bestehend aus einem Extruder (6), einem Kühltunnel (8), der mit dem Extruder fluchtend angeordnet ist, einer Einrichtung für die automatische Reinigung (1) als Bindeglied mit den Einrichtungen (11) für die spätere Formgebung und für die Aufbereitung, wobei die Einrichtung für die Reinigung (1) einen Metalldetektor (16), eine Schneideeinrichtung (17) und drei Ausgänge besitzt, und zwar einen fluchtend angeordneten Ausgang (2), einen seitlichen Ausgang (3) für die Abführung der verunreinigten Teilstücke aus dem Strang und einen seitlichen Ausgang für die Rückführung (5), der über eine Rückführungsschleife (4) mit Förderbändern mit dem Eingang des Extruders (6) in Verbindung steht.

2. Automatische Reinigungsanlage gemäß Anspruch 1,
**dadurch gekennzeichnet,** daß
in der automatischen Reinigungseinrichtung
- der Metalldetektor (16) am Eingang angeordnet ist,
- die Schneideeinrichtung (17)
• mit dem Metalldetektor über einen Durchgangskanal (21) verbunden ist, der mit Treibrollen (22,23) ausgerüstet ist;
• über eine Zufuhrleitung (27) an einer Ausgangsleitung (32) angeschlossen ist, die fluchtend durch eine Lenkungswippe (30) zwischen mindestens zwei Stellungen verbunden ist, wovon die eine einer Stellung entspricht, die mit den anderen Führungen für den fluchtenden, direkten Ausgang (2) ausgerichtet ist, und die andere eine nach oben geneigte Stellung für den seitlichen Ausgang für die Rückführung ist, wobei der Ausgang für die Rückführung ein Teil (35) für die Umlenkung des Strangs zu einer Ausgangsrampe (13) besitzt, welche den Anfang der Rückführungsschleife (4) zu dem Extruder (6) hin bildet.

3. Automatische Reinigungsanlage gemäß Anspruch 2,
**dadurch gekennzeichnet,** daß
die Zufuhrleitung (27) schwenkbar angeordnet ist, um den Auslaß der Öffnung der Schneideeinrichtung (17) freizuhalten, damit das Teilstück, das von dem Strang abgetrennt wurde, in den Trog zur Rückgewinnung (33) abgleiten kann.

4. Automatische Reinigungsanlage gemäß Anspruch 2 oder 3,
**dadurch gekennzeichnet,** daß
die Schneideeinrichtung (17) aus einem Messer (26) gebildet ist, das in einer Aussparung (25) schwenkbar ist.

5. Automatische Reinigungsanlage gemäß Anspruch 4,
**dadurch gekennzeichnet,** daß
die beiden Längsseiten des Messers (26) Schneidkanten sind.

6. Automatische Reinigungsanlage gemäß Anspruch 2,
**dadurch gekennzeichnet,** daß
die Lenkungswippe (30) aus einem schwenkbaren Teil (31) gebildet ist, und zwar zwischen einer unteren schrägen Stellung, einer Stellung für das Ausrichten mit der Zufuhrleitung (27) und mit der unmittelbaren Ausgangsleitung (32) für den Strang und schließlich einer schrägen Stellung nach oben für die Rückführung des Strangs durch das Teil für die Umlenkung des Strangs (35).

7. Automatische Reinigungsanlage gemäß Anspruch 6,
**dadurch gekennzeichnet,** daß
das schwenkbare Teil (31) in der unteren schrägen Stellung um eine Mittelachse exzentrisch schwenkt, um das Ende der Zufuhrleitung (27) freizuhalten, damit das Teilstück, das von dem Strang abgetrennt wurde, in den Trog zur Rückgewinnung (33) unmittelbar gleiten kann.

8. Automatische Reinigungsanlage gemäß den Ansprüchen 2 und 6,
**dadurch gekennzeichnet,** daß
das Teil für die Umlenkung des Strangs (35) aus einer Ableitungstrommel (36) gebildet ist, die mit zwei außenliegenden Wangen (37,38) mit einem größeren Durchmesser versehen ist, wodurch die Ableitungstrommel das allgemeine Aussehen eines Radkranzes erhält, dessen ringförmiger Raum von einer Rampe (39) verschlossen ist, die auf dem Teil des Umfanges im hinteren Teil nach innen gebogen ist und einen Winkelraum zwischen einem Viertelkreis und einem Halbkreis von der Stellung des Endes des schwenkbaren Teils (31) im aufgerichteten Zustand bis zu der oberen Stellung für das Freihalten einnimmt.

9. Automatische Reinigungsanlage gemäß Anspruch 6,
**dadurch gekennzeichnet,** daß
das schwenkbare Teil (31) in der unteren schrägen Stellung sich zu dem Trog zur Rückgewinnung (33) senkt.

10. Automatische Reinigungsanlage gemäß Anspruch 5,
**dadurch gekennzeichnet,** daß
das Messer (26) das eine Ende des verunreinigten Teilstücks bei der Hin-Bewegung und das andere Ende bei der Zurück-Bewegung nach dem Schwenken abschneidet, um die beiden Schneidkanten zu benützen.
